# FASCICULE DE BREVET EUROPEEN

(11) **EP 0 355 235 B1**
(45) Date de publication et mention de la délivrance du brevet: **09.06.1993**
(21) Numéro de dépôt: 88420285.4
(22) Date de dépôt: 23.08.1988
(51) Int. Cl.: B65D 41/34, B29C 45/44

(54) **Moule utilisé pour la fabrication d'un bouchon à vis à ceinture d'inviolabilité, du type démoulé par dévissage**
Form zur Herstellung einer vom Gehäuse abschraubbaren Originalitätsverschlusskappe
Mould used to make a screw cap with a tamper-evident ring, removed from the mould by unscrewing

(43) Date de publication de la demande: 28.02.1990
(73) Titulaire: ASTRA PLASTIQUE Société Anonyme, 69830 Saint Georges de Reneins (FR)
(72) Inventeur: Odet, Philippe, F-69380 Chasselay (FR); Ambrosi, Jacques, F-69400 Villefranche-sur-Saône (FR)
(74) Mandataire: Maureau, Pierre

(56) Documents cités:
- EP-A- 0 125 097
- FR-A- 2 503 672

## Description

La présente invention a pour objet un moule destiné à la réalisation d'un bouchon à vis en matière synthétique, muni d'une ceinture d'inviolabilité, et démoulable par dévissage.

Un bouchon de ce genre est classiquement constitué de deux parties moulées d'une seule pièce et reliées entre elles par des pontets :
- une partie supérieure, ou capuchon, qui se compose d'une cuvette assurant l'étanchéité à l'intérieur du goulot de la bouteille recevant le bouchon, et d'une jupe extérieure filetée intérieurement qui est reliée à la cuvette par un plafond annulaire assez rigide ;
- une partie inférieure constituant la ceinture d'inviolabilité ou de garantie, qui est placée dans le prolongement inférieur de la jupe filetée ; cette ceinture comporte sur sa face intérieure des saillies centripètes réparties sur une même circonférence et dont le rôle est de s'opposer, en combinaison avec un profil complémentaire du goulot de la bouteille, au soulèvement de cette ceinture lors de la première ouverture de la bouteille par dévissage du capuchon, ce qui entraîne la rupture de tous les pontets et donc la séparation du capuchon et de la ceinture.

Ce type de bouchon est difficile à réaliser par moulage. En effet, lors de l'extraction, pour le démoulage, de la partie filetée du noyau du moule, cette extraction se faisant classiquement par dévissage, il s'exerce sur les saillies centripètes de la ceinture une force axiale qui a tendance à casser les pontets.

Le document EP-A-0 125 097 décrit un bouchon à vis à ceinture d'inviolabilité présentant des organes intérieurs d'accrochage et possédant un profil extérieur tel que, lors de l'enlèvement du noyau du moule, les organes d'accrochage sont repoussés radialement par ce noyau et provoquent la dilatation de l'extrémité libre de la ceinture. Ce document décrit également un moule destiné à la réalisation par moulage d'un bouchon à vis, ce moule comportant une empreinte supérieure pour le moulage du capuchon du bouchon, une empreinte inférieure pour le moulage de sa ceinture d'inviolabilité, et un noyau, cette empreinte inférieure étant ellemême composée de deux parties :
- une partie supérieure en forme de bague, pour le moulage de la partie supérieure tronconique de la ceinture ;
- une partie inférieure en forme de douille pour le moulage de la partie inférieure, ou extrémité libre, de la ceinture, cette seconde partie étant mobile axialement par rapport à la partie supérieure sur une course supérieure à la hauteur de cette partie libre de la ceinture.

Le moule selon l'invention, destiné à la réalisation par moulage d'un bouchon à vis comportant une ceinture d'inviolabilité qui, comportant des organes intérieurs d'accrochage, présente un profil extérieur biconique convexe, ce moule comportant une empreinte supérieure pour le moulage du capuchon du bouchon, une empreinte inférieure pour le moulage de sa ceinture d'inviolabilité, et un noyau dévissable, cette empreinte inférieure étant elle-même composée de deux parties :
- une partie supérieure fixe en forme de bague, pour le moulage de la partie supérieure tronconique de la ceinture ;
- une partie inférieure en forme de douille pour le moulage de la partie inférieure tronconique, ou extrémité libre, de la ceinture, cette seconde partie étant caractérisée en ce qu'elle est mobile axialement sur une course juste supérieure à la hauteur de cette partie tronconique libre de la ceinture, de telle sorte que la dilatation précitée du bord libre de la ceinture lui permet de prendre appui, lors du dévissage du noyau, sur la tranche supérieure de cette seconde partie de l'empreinte inférieure du moule.

Avantageusement, pour diminuer la valeur minimale nécessaire de dilatation, cette partie conique libre de la ceinture présente des crans extérieurs qui augmentent son diamètre extérieur.

Avantageusement encore, la partie précitée en forme de bague du moule présente des crans orientés radialement vers l'intérieur, créant dans la partie correspondante de la ceinture des crans complémentaires ayant pour effet d'assurer sa liaison en rotation avec la bague du moule et assurant, de ce fait, sa retenue contre les sollicitations en rotation par le noyau, lors de son dévissage.

De toute façon, l'invention sera bien comprise, et ses avantages et caractéristiques apparaîtront, lors de la description suivante d'un exemple non limitatif de réalisation, en référence au dessin schématique annexé dans lequel :
Figure 1 est une vue en perspective de ce bouchon ;
Figure 2 est une vue en coupe, selon II-II de figure 3, de ce bouchon en place de façon étanche sur le goulot d'une bouteille ;
Figure 3 est une vue en coupe transversale, selon III-III de figure 2 ; et
Figures 4 à 7 sont des coupes verticales partielles au niveau de la ceinture d'inviolabilité, schématisant les étapes essentielles de démoulage du bouchon.

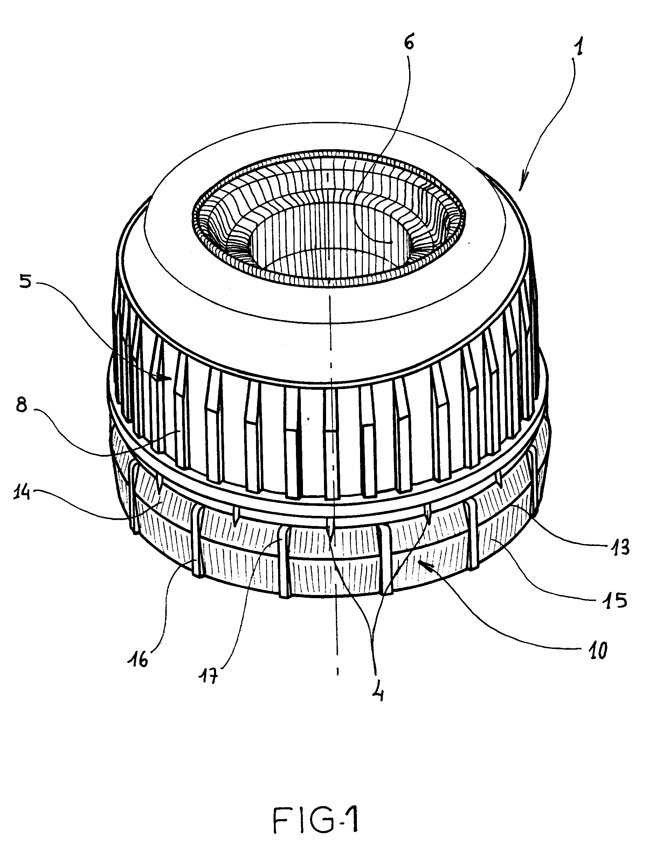

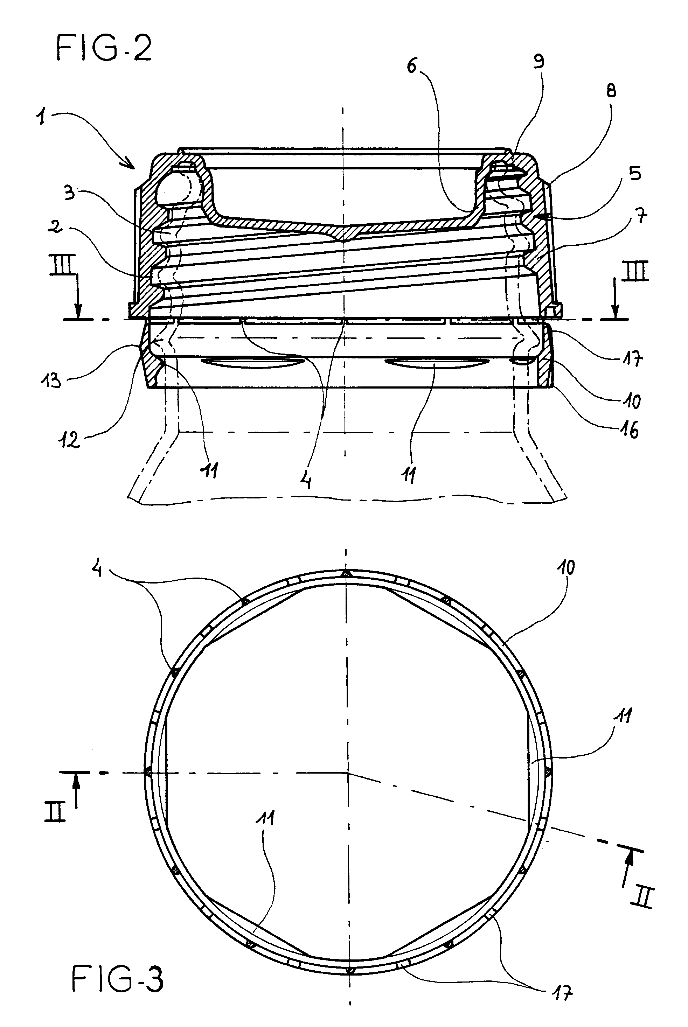

En se reportant aux figures 1 à 3, ce bouchon 1 est un bouchon à vis en matière plastique, qui est réalisé d'une seule pièce par moulage, et dont le filetage intérieur 2 correspond précisément à celui du goulot 3 d'une bouteille, dessiné en traits mixtes sur la figure 2.

Le bouchon 1 est constitué de deux parties reliées entre elles par des pontets cassables 4 :
- une partie supérieure, ou capuchon 5, qui se compose d'une cuvette 6 assurant l'étanchéité à l'intérieur du goulot 3 de la bouteille, et d'une jupe extérieure 7 filetée intérieurement en 2 et comportant des stries extérieures 8, qui est reliée à la cuvette 6 par un plafond annulaire 9 assez rigide ;
- une partie inférieure constituant la ceinture 10 d'inviolabilité ou de garantie, qui est placée dans le prolongement inférieur de la jupe filetée 7.

La ceinture 10 comporte sur sa face intérieure des secteurs intérieurs d'accrochage 11, répartis sur une même circonférence, dont le rôle est de s'opposer, en coopération avec un profil complémentaire 12 du goulot 3 de la bouteille, au soulèvement de cette ceinture 10 lors de la première ouverture de la bouteille par dévissage du capuchon 5, ce qui entraîne la rupture de tous les pontets 4 et donc la séparation du capuchon 5 et de la ceinture 10.

Conformément à l'invention, la ceinture d'inviolabilité 10 présente un profil extérieur biconique convexe, de sorte que cette ceinture est constituée extérieurement de deux parties contigües, se raccordant par une ligne circulaire 13 :
- une partie supérieure 14 en forme de tronc de cône s'évasant du haut vers le bas ;
- une partie inférieure 15 en forme de tronc de cône s'évasant du bas vers le haut.

Les secteurs d'accrochage 11 sont placés sur la face interne de la partie inférieure 15 de la ceinture 10, légèrement en dessous du niveau de la circonférence horizontale 13.

Comme il sera explicité ci-après, cette forme biconique convexe permet d'effectuer le démoulage du bouchon sans risque d'arrachement de la ceinture 10 par rupture des pontets 4, du fait qu'ainsi, lors du dévissage du noyau du moule, les secteurs d'accrochage 11 sont repoussés radialement par ce noyau et provoquent la dilatation du diamètre de son extrémité libre.

Par ailleurs, la partie tronconique libre 15 de la ceinture 10 présente des crans 16 orientés radialement vers l'extérieur, qui ont pour rôle, en augmentant son diamètre extérieur hors-tout, de faciliter le démoulage, comme on le verra ci-après.

En outre, la partie tronconique supérieure 14 de la ceinture 10 présente, elle aussi, des crans 17 orientés radialement vers l'extérieur, dont le rôle est d'empêcher, lors du démoulage par dévissage du noyau du moule, la rotation de la ceinture 10 et du capuchon 5. Dans l'exemple considéré, les crans 16 et 17 sont alignés verticalement, mais ils pourraient aussi être décalés l'un par rapport à l'autre.

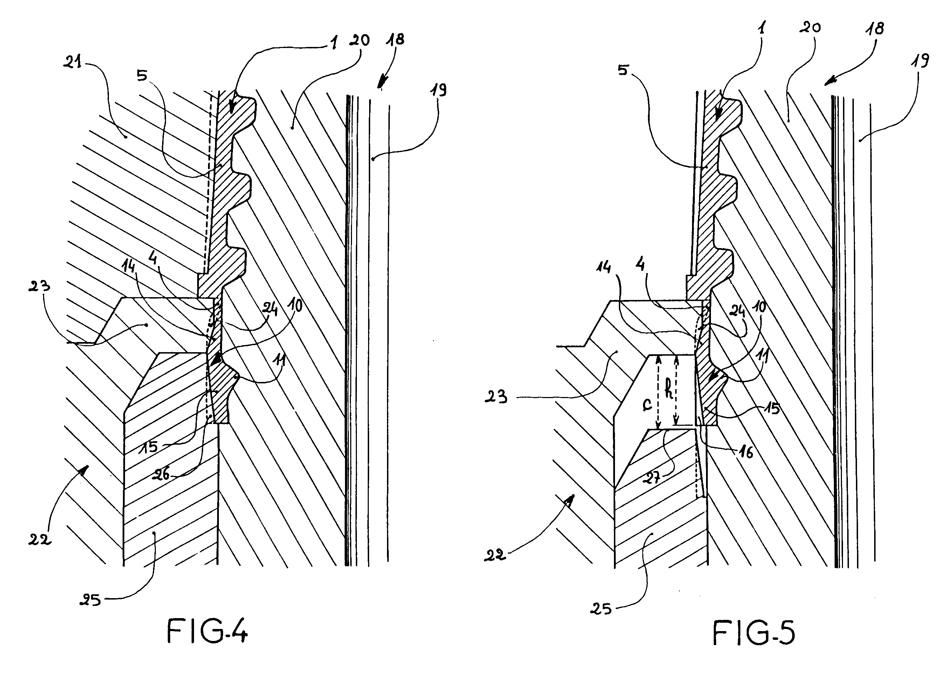

On se reportera maintenant aux figures 4 à 7 afin d'expliquer comment sont réalisés le moulage, puis le démoulage de ce bouchon. Ces figures sont des coupes partielles réalisées au niveau de la moitié inférieure du bouchon 1, les parties restantes du moule étant en soi très classiques et n'ayant pas été représentées de ce fait.

La figure 4 montre le bouchon 1 en cours ou en fin de moulage. Le moule comprend :
- un noyau 18, lui-même composé d'une partie centrale, ou noyau central 19, et d'une partie externe tubulaire dévissable, ou noyau dévissable 20 ;
- une empreinte supérieure 21 pour le moulage du capuchon 5 du bouchon, et
- une empreinte inférieure 22 pour le moulage de la ceinture 10 et des pontets 4.

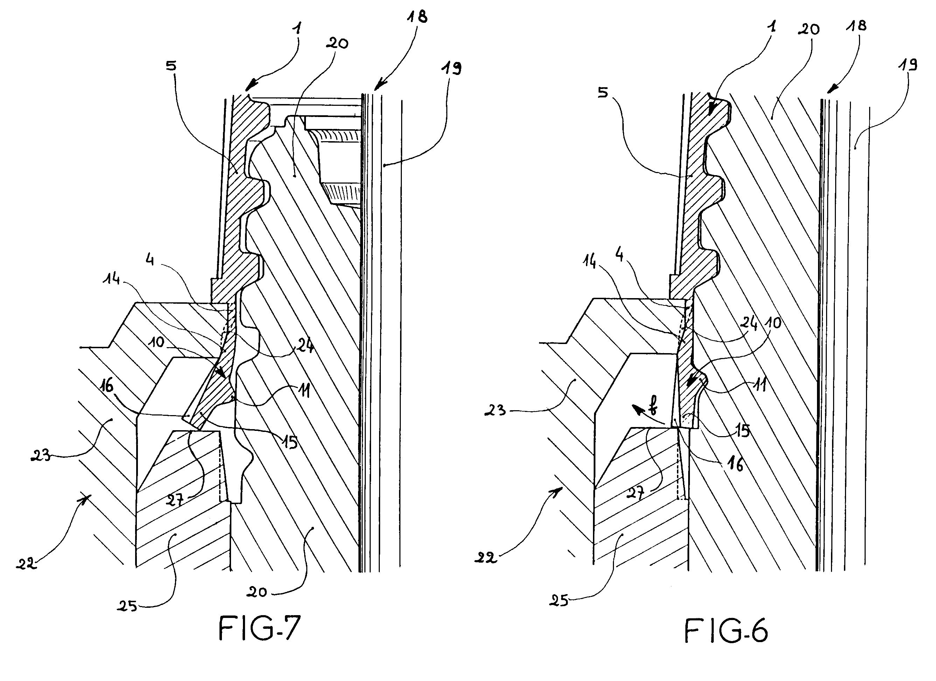

L'empreinte inférieure 22 est elle-même composée de deux parties :
- une partie supérieure fixe 23 en forme de bague pour le moulage de la partie supérieure tronconique 14 de la ceinture et de ses crans, lesdits crans étant moulés au moyen de crans complémentaires 24 dans cette bague, ces crans 24 étant orientés radialement vers l'intérieur ;
- une partie inférieure 25 en forme de douille pour le moulage de la partie inférieure tronconique 15, ou extrémité libre, de la ceinture, cette seconde partie 25 étant mobile axialement sur une course c (figure 5) juste supérieure à la hauteur h (figure 5) de cette partie tronconique libre 15 ; là encore, des crans 26 sont prévus dans cette douille 25 pour le moulage des crans 16 précités.

La figure 5 montre la première phase du démoulage, qui consiste, après avoir enlevé l'empreinte supérieure 21, à descendre la douille 25 de sa course c, ce qui libère radialement la partie tronconique inférieure 15 de la ceinture.

On amorce alors, comme représenté figure 6, le dévissage du noyau 20. Ce noyau vient alors presser vers le bas les secteurs d'accrochage 11, de sorte que la ceinture 10, encore chaude, s'allonge très légèrement tout en commençant à se dilater par son extrémité libre 15. Il s'ensuit que les crans 16 viennent en appui sur la face supérieure 27 de la douille 25, comme représenté schématiquement, ce qui tend à s'opposer à l'allongement de la ceinture, de sorte que la force de dévissage exercée en 11 entraîne le basculement vers l'extérieur de l'extrémité libre 15 de la ceinture, comme indiqué par la flèche f, sans traction substantielle de bas en haut sur les pontets 4.

En se reportant finalement à la figure 7, le dévissage du noyau 20 est poursuivi, de sorte que l'extrémité libre 15 continue à se dilater sous l'effet de la poussée radiale exercée par le noyau 20 sur la tranche des secteurs d'accrochage 11, tout en restant en appui sur la face supérieure 27 de la douille 25, ce qui annule pratiquement tout risque de cassure des pontets 4 par traction.

Au cours du dévissage du noyau 20, le bouchon 1 est bloqué en rotation dans la douille intermédiaire 23 par les crans 17 prévus à cet effet.

En fin de dévissage, l'extrémité libre 15 de la ceinture revient à sa forme de moulage initiale, et le bouchon 1 reste prisonnier sur la bague intermédiaire fixe 23 par la ceinture de garantie 10. L'éjection du bouchon est alors assurée par un mouvement vers le haut du noyau central 19.

L'invention n'est bien entendu pas limitée à l'exemple de réalisation qui vient d'être décrit. Bien qu'avantageux, les crans 16 pourraient être omis et les éléments du moule, en particulier les empreintes, pourraient avoir d'autres formes extérieures que celles représentées.

## Revendications

1. Moule destiné à la réalisation par moulage d'un bouchon à vis comportant une ceinture d'inviolabilité (10) qui, comportant des organes intérieurs d'accrochage (11), présente un profil extérieur biconique convexe, ce moule comportant une empreinte supérieure (21) pour le moulage du capuchon (5) du bouchon, une empreinte inférieure (22) pour le moulage de sa ceinture d'inviolabilité (10), et un noyau dévissable (20), cette empreinte inférieure (22) étant elle-même composée de deux parties :
- une partie supérieure fixe (23) en forme de bague, pour le moulage de la partie supérieure tronconique (14) de la ceinture ;
- une partie inférieure (25) en forme de douille pour le moulage de la partie inférieure tronconique (15), ou extrémité libre, de la ceinture, caractérisé en ce que cette seconde partie (25) est mobile axialement sur une course (c) juste supérieure à la hauteur (h) de cette partie tronconique libre (15) de la ceinture, de telle sorte que la dilatation précitée du bord libre de la ceinture lui permet de prendre appui, lors du dévissage du noyau (20), sur la tranche supérieure (27) de cette seconde partie (25) de l'empreinte inférieure (22) du moule.

## Claims

1. A mould intended for the production by moulding of a screw cap having an anti-tamper band (10) which includes internal fixing members (11) and has a convex biconical external profile, this mould having an upper mould part (21) for moulding the cover (5) of the cap, a lower mould part (22) for moulding its anti-tamper band (10), and an unscrewable core (20), this lower mould part (22) itself comprising two portions :
- a fixed upper portion (23) in the shape of a ring, for moulding the truncated cone-shaped upper portion (14) of the band;
- a lower portion (25) in the shape of a sleeve for moulding the truncated cone shaped lower portion (15), or free end, of the band, characterised in that this second portion (25) is movable axially over a path (c) just greater than the height (h) of this free truncated cone-shaped portion (15) of the band, such that the aforementioned expansion of the free edge of the band allows it to bear, when the core (20) is unscrewed, on the upper part (27) of this second portion (25) of the lower part (22) of the mould.

## Patentansprüche

1. Form zum Gießformen eines Schraubverschlusses mit einem Unverletzlichkeitsgürtel (10), welcher innere Verhakungsorgane (11) hat und ein äußeres, bikonisches konvexes Profil aufweist, wobei diese Form eine obere Matrize (21) zum Formen der Haube (5) des Verschlusses, eine untere Matrize (22) zum Formen seines Unverletzlichkeitsgürtels (10) und einen ausschraubbaren Kern (20) hat und diese untere Matrize selbst wieder aus zwei Abschnitten besteht:
- einem oberen festen Abschnitt (23) in der Form eines Ringes zum Formen des oberen kegelstumpfförmigen Abschnittes (14) des Gürtels;
- einem unteren Abschnitt (25) in der Form einer Hülse zum Formen des unteren kegelstumpfförmigen Abschnittes (15) bzw. freien Endes des Gürtels,
dadurch **gekennzeichnet,** daß dieser zweite Abschnitt (25) axial über eine Wegstrecke (c) beweglich ist, die gerade größer als die Höhe (h) dieses kegelstumpfförmigen freien Abschnittes (15) des Gürtels ist derart, daß die oben genannte Aufweitung des freien Randes des Gürtels diesem erlaubt, sich beim Ausschrauben des Kernes (20) auf der oberen Stirnfläche(27) dieses zweiten Abschnittes (25) der unteren Matrize (22) der Form abzustützen.
